# EUROPÄISCHE PATENTANMELDUNG

(11) **EP 3 836 291 A1**
(43) Veröffentlichungstag der Anmeldung: **16.06.2021**
(21) Anmeldenummer: 20208989.2
(22) Anmeldetag: 20.11.2020
(51) Int. Cl.: H01M 10/613, H01M 10/653, H01M 10/48

(54) **BATTERIEZELLMODUL FÜR EINE BATTERIE UND VERFAHREN ZU DESSEN HERSTELLUNG**

(30) Priorität: 10.12.2019 DE 102019219258
(71) Anmelder: Robert Bosch GmbH, 70442 Stuttgart (DE)
(72) Erfinder: Loges, Iryna, 71706 Markgroeningen (DE); Fomen, Gilles Desmond, 75417 Muehlacker (DE); Schiefer, Peter, 74199 Unterheinriet (DE); Maenner, Manuel, 70619 Stuttgart (DE); Meincke, Georg, 71229 Leonberg (DE)

(57) **Zusammenfassung**

Die Erfindung betrifft ein Batteriezellmodul (1) für eine Batterie, aufweisend einen Modulgrundkörper (2) mit einer Mehrzahl von Aufnahmekavitäten (3), wobei in den Aufnahmekavitäten (3) jeweils eine Batteriezelle (4) des Batteriezellmoduls (1) angeordnet ist, eine elektrische Kopplungsvorrichtung (5) mit einer Mehrzahl von elektrischen Leitern (6), wobei die Batteriezellen (4) über die elektrischen Leiter (6) miteinander elektrisch gekoppelt sind, sowie eine Kühlvorrichtung (7) zum Kühlen der Batteriezellen (4), wobei die Kühlvorrichtung (7) an einer ersten Grundkörperseite (8) des Modulgrundkörpers (2) angeordnet ist. Zwischen der Kühlvorrichtung (7) und den Batteriezellen (4) ist ein verformbares Wärmeleitmedium (9) derart angeordnet, dass die Batteriezellen (4) über das Wärmeleitmedium (9) mit der Kühlvorrichtung (7) thermisch gekoppelt sind. Die Batteriezellen (4) sind über den Modulgrundkörper (2) in Richtung der Kühlvorrichtung (7) gedrückt. Ferner betrifft die Erfindung ein Verfahren zur Herstellung eines erfindungsgemäßen Batteriezellmoduls (1).

## Beschreibung

### Stand der Technik

Batteriezellmodule mit Batteriezellen, insbesondere Rundzellen, für Produkte, wie bspw. 48V Batterien, E-Bikes, E-Trikes oder E-Scooter weisen zum Halten der Batteriezellen zumeist einen Modulgrundkörper mit mindestens zwei Grundkörperteilen auf, welche miteinander verschraubt oder verklippst sind. Zur Aufnahme der Batteriezellen weisen die Modulgrundkörper eine Vielzahl von Aufnahmekavitäten auf, welche zur Sicherstellung einer festen Anbindung der Batteriezellen an den Modulgrundkörper genau toleriert und auf die Abmessungen der Batteriezellen abgestimmt sind.

Selbst geringfügige Veränderungen der geometrischen Abmessungen der Batteriezellen, bspw. aufgrund eines Herstellerwechsels oder Qualitätsproblemen des Herstellers, erfordern eine entsprechende Anpassung der Abmessungen der Aufnahmekavitäten, um weiterhin eine bestimmungsgemäße Aufnahme der Batteriezellen im Modulgrundkörper sicherzustellen. Derartige Anpassungen sind oftmals nicht leicht realisierbar und erfordern zumeist die Bereitstellung neuer kostenintensiver Werkzeuge oder zumindest eine aufwendige Überarbeitung der bereits vorhandenen Werkzeuge zur Herstellung des Modulgrundkörpers.

Batteriezellmodule weisen eine Verlustleistung auf, welche sich in der Umwandlung von elektrischer Energie in Wärmeenergie niederschlägt. Eine übermäßige Erwärmung des Batteriezellmoduls erhöht dessen Alterung und führt zu Leistungsverlusten. Je besser die Wärmeabfuhr gewährleistet ist, desto geringer fällt die Erwärmung des Batteriezellmoduls und somit geringer fallen die Alterung sowie der Leistungsverlust des Batteriemoduls aus. Daher ist eine ausreichende Abfuhr dieser Wärmeenergie des Batteriezellmoduls insbesondere während eines Ladevorgangs sowie eines Entladevorgangs der Batteriezelle von besonderer Bedeutung, da die Verlustleistung und somit die Erwärmung des Batteriezellmoduls während dieser Betriebszustände erhöht ist.

Bei bekannten Batteriezellmodulen erfolgt die Wärmeabfuhr zumeist konvektiv über die Luft, welche die Batteriezellen des Batteriezellmoduls ruhend umgibt. Alternative Batteriemodulkonzepte mit konduktiver Wärmeabfuhr oder einer aktiven Lüftungsvorrichtung zum Austauchen der von den Batteriezellen erwärmten Luft weisen eine verhältnismäßig hohe Komplexität auf und verursachen somit einen besonders hohen Montageaufwand sowie deutlich erhöhte Fertigungskosten, was sich negativ auf eine Wettbewerbsfähigkeit des Batteriezellmoduls auswirken kann.

### Offenbarung der Erfindung

Der Gegenstand der Erfindung ist in den Patentansprüchen aufgeführt. Ein erster Aspekt der Erfindung betrifft ein Batteriezellmodul für eine Batterie mit den Merkmalen des unabhängigen Anspruchs 1. Ein zweiter Aspekt der Erfindung betrifft ein Verfahren zur Herstellung eines erfindungsgemäßen Batteriezellmoduls für eine Batterie mit den Merkmalen des nebengeordneten Anspruchs 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Batteriezellmodul beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe durch ein Batteriezellmodul für eine Batterie gelöst. Das Batteriezellmodul weist einen Modulgrundkörper mit einer Mehrzahl von Aufnahmekavitäten auf, wobei in den Aufnahmekavitäten jeweils eine Batteriezelle des Batteriezellmoduls angeordnet ist. Ferner weist das Batteriezellmodul eine elektrische Kopplungsvorrichtung mit einer Mehrzahl von elektrischen Leitern auf, wobei die Batteriezellen über die elektrischen Leiter miteinander elektrisch gekoppelt sind. Zudem weist das Batteriezellmodul eine Kühlvorrichtung zum Kühlen der Batteriezellen auf, wobei die Kühlvorrichtung an einer ersten Grundkörperseite des Modulgrundkörpers angeordnet ist. Erfindungsgemäß ist zwischen der Kühlvorrichtung und den Batteriezellen ein verformbares Wärmeleitmedium derart angeordnet, dass die Batteriezellen über das Wärmeleitmedium mit der Kühlvorrichtung thermisch gekoppelt sind. Überdies sind die Batteriezellen über den Modulgrundkörper in Richtung der Kühlvorrichtung gedrückt. Vorzugsweise weist der Modulgrundkörper eine Anschlagsvorrichtung auf, gegen die die Batteriezellen gedrückt sind, sodass ein Verdrängen des Wärmeleitmediums durch die Batteriezellen vermieden ist. Die Anschlagsvorrichtung weist bspw. einen oder mehrere Absätze auf. Der Absatz kann bspw. ringförmig ausgebildet sein. Bei mehreren Absätzen weist der Modulgrundkörper vorzugsweise mindestens drei Absätze auf, die insbesondere sternförmig angeordnet sind, um eine gleichmäßige Lastverteilung zu verbessern. Ein Kraftfluss beim Verstemmen läuft somit vom umgeformten Material des Modulgrundkörpers durch die Batteriezelle in die Anschlagsvorrichtung. Das Wärmeleitmedium liegt somit vorzugsweise drucklos an den Batteriezellen an.

Der Modulgrundkörper weist vorzugsweise ein Grundkörpermaterial auf oder ist aus einem Grundkörpermaterial gebildet, welches elektrisch isolierend ist, sodass ein Kurzschluss zwischen benachbarten Batteriezellen hierdurch vermieden wird. Zusätzlich oder alternativ können die Batteriezellen ein elektrisch isolierendes Material zur Vermeidung von Kurzschlüssen mit benachbarten Batteriezellen aufweisen. Als Grundkörpermaterial ist ein Kunststoff, insbesondere ein thermoplastischer oder duroplastischer Kunststoff, bevorzugt. Das Grundkörpermaterial ist vorzugsweise verhältnismäßig schwer entflammbar und weist bei der Betriebstemperatur des Batteriezellmoduls, insbesondere bei einer Temperatur von 40°C, insbesondere bei einer Temperatur von 60°C, eine derartige Formstabilität auf, dass ein sicherer Halt der Batteriezellen in den Aufnahmekavitäten gewährleistet ist.

Die Batteriezellen sind mittels der elektrischen Kopplungsvorrichtung miteinander verschaltet. Hierfür weist die elektrische Kopplungsvorrichtung die elektrischen Leiter auf, welche bspw. als Leiterbahnen ausgebildet sind. Die Leiterbahnen sind vorzugsweise bandförmig ausgebildet. Das bedeutet, dass die Leiterbahnen eine Dicke aufweisen, welche im Verhältnis zur Länge und zur Breite der Leiterbahn relativ klein ist. Vorzugsweise sind die elektrischen Leiter zumindest abschnittsweise mit einer Isolierung, wie bspw. einer Folie, insbesondere einer mehrschichtigen Folie, einer Mappe, einem Lack oder dergleichen, versehen, um einen Kurzschluss zwischen benachbarten elektrischen Leitern zu vermeiden. Die elektrischen Leiter sind vorzugsweise über eine Schweißung oder Lötung mit den Batteriezellen elektrisch gekoppelt. Vorzugsweise sind die elektrischen Leiter mittels Laserschweißen mit den Batteriezellen verbunden. Die Batteriezellen sind vorzugsweise als Rundzellen ausgebildet.

Die elektrische Kopplungsvorrichtung ist vorzugsweise an einer Seite des Modulgrundkörpers, insbesondere an einer Stirnseite der Batteriezellen, angeordnet. Weiter bevorzugt sind die Batteriezellen nur an einer Seite über die elektrische Kopplungsvorrichtung miteinander elektrisch gekoppelt. Auf diese Weise ist die elektrische Kopplung besonders platzsparend realisierbar.

Die Kühlvorrichtung ist an der ersten Grundkörperseite des Modulgrundkörpers angeordnet. Stirnseiten der Batteriezellen sind vorzugsweise der ersten Grundkörperseite benachbart angeordnet. Vorzugsweise sind die Stirnseiten der Batteriezellen parallel zur ersten Grundkörperseite angeordnet. Es kann erfindungsgemäß vorgesehen sein, dass die Kühlvorrichtung eine Kühlvorrichtungsgrundfläche aufweist, welche eine Grundkörpergrundfläche des Modulgrundkörpers übersteigt. Vorzugsweise ist die Kühlvorrichtung am Modulgrundkörper gehalten, insbesondere verpresst, verschraubt, verklebt, umspritzt oder dergleichen. Es kann erfindungsgemäß vorgesehen sein, dass die Kühlvorrichtung in eine Aufnahme des Modulgrundkörpers quer zur Längserstreckung der Aufnahmekavitäten und somit der Batteriezellen eingeschoben ist. Auf diese Weise ist ein unbeabsichtigtes Lösen der Kühlvorrichtung vom Modulgrundkörper vermeidbar.

Die Kühlvorrichtung ist zum Kühlen des Batteriezellmoduls ausgebildet und weist demnach vorzugsweise ein Material auf, welches eine besonders gute Wärmeleitfähigkeit aufweist. Bevorzugte Materialien sind bspw. Kupfer, Aluminium oder Kompositmaterialien mit entsprechenden thermischen Eigenschaften. Die Batteriezellen und die Kühlvorrichtung sind vorzugsweise derart ausgebildet und angeordnet, dass kein direkter Kontakt zwischen den Batteriezellen und die Kühlvorrichtung besteht.

Über das Wärmeleitmedium ist eine thermische Kopplung zwischen den Batteriezellen, insbesondere einer Stirnseite der Batteriezellen, und der Kühlvorrichtung hergestellt. Es kann erfindungsgemäß vorgesehen sein, dass ein Teil des Wärmeleitmediums innerhalb eines Teilbereichs der Aufnahmekavitäten angeordnet ist und zumindest einen Abschnitt der Batteriezellen seitlich kontaktiert oder kontaktierend umgibt. Auf diese Weise ist eine Wärmeabfuhr von den Batteriezellen zur Kühlvorrichtung weiter verbessert, da über die größere Kontaktfläche zwischen Wärmeleitmedium und Batteriezelle ein größerer Wärmetransport realisierbar ist.

Das verformbare Wärmeleitmedium ist vorzugsweise als Festkörper oder als Flüssigkeit, insbesondere als hochviskose Flüssigkeit, ausgebildet. Besonders bevorzugt ist das Wärmeleitmedium als Wärmeleitgel oder Wärmeleitpaste ausgebildet. Vorzugsweise ist das Wärmeleitmedium elastisch und/oder plastisch verformbar ausgebildet, um eine Kontaktierung mit den Batteriemodulen zu verbessern. Das Wärmeleitmedium ist vorzugsweise gummiartig oder zähflüssig ausgebildet. Es kann erfindungsgemäß vorgesehen sein, dass das Wärmeleitmedium bei der Montage der Batteriezelle am Modulgrundkörper fließfähig, insbesondere zähflüssig, oder gelartig ausgebildet ist und anschließend in einem ausgehärteten Zustand vorliegt.

Zur Verbesserung eines Wärmeübergangs von den Batteriezellen zur Kühlvorrichtung sind die Batteriezellen über den Modulgrundkörper in Richtung der Kühlvorrichtung gedrückt. Vorzugsweise sind die Batteriezellen durch Verstemmen in den Modulgrundkörper geklemmt. Hierfür weist der Modulgrundkörper vorzugsweise eine Anschlagsvorrichtung auf, welche im Bereich der Kühlvorrichtung angeordnet ist. Die Batteriezellen sind vorzugsweise zwischen Anschlagsvorrichtung und Verstemmung geklemmt. Vorzugsweise kontaktieren die Batteriezellen das Wärmeleitmedium.

Ein erfindungsgemäßes Batteriezellmodul hat gegenüber herkömmlichen Batteriezellmodulen den Vorteil, dass mit einfachen Mitteln sowie auf eine kostengünstige Art und Weise ein Batteriezellmodul bereitgestellt ist, welches eine kompakte Bauweise aufweist und zudem eine besonders vorteilhafte Wärmeabfuhr der Verlustwärme aus den Batteriezellen über das Wärmeleitmedium und die Kühlvorrichtung gewährleistet. Das Risiko einer Überhitzung und des Batteriezellmoduls und somit eine Alterung sowie ein Leistungsverlust sind somit gegenüber herkömmlichen Batteriezellmodulen erheblich reduziert.

Gemäß einer bevorzugten Weiterentwicklung der Erfindung kann bei einem Batteriezellmodul vorgesehen sein, dass die Kühlvorrichtung eine Kühlplatte aufweist. Die Kühlvorrichtung kann demnach bspw. als Kühlplatte ausgebildet sein. Vorzugsweise erstreckt sich die Kühlvorrichtung komplett über die erste Grundkörperseite. Besonders bevorzugt ragt die Kühlvorrichtung seitlich über die erste Grundkörperseite hinaus und bildet somit einen seitlichen Überstand. Vorzugsweise ist der seitliche Überstand umlaufend. Auf einer den Batteriezellen abgewandten Seite weist die Kühlvorrichtung vorzugsweise eine oder mehrere Kühlrippen zur verbesserten Wärmeabgabe an die Umgebung auf. Dies hat den Vorteil, dass mit einfachen Mitteln sowie auf eine kostengünstige Art und Weise eine verbesserte Wärmeabfuhr von den Batteriezellen bereitgestellt ist.

Es ist erfindungsgemäß bevorzugt, dass die Kühlplatte Befestigungsdurchführungen zum Durchführen von Befestigungsmitteln aufweist. Die Befestigungsdurchführungen sind vorzugsweise an einem Randbereich der Kühlvorrichtung angeordnet. Es ist bevorzugt, dass die Kühlvorrichtung im Bereich mindestens einer Befestigungsdurchführung einen seitlich abstehenden, vorzugsweise eine Rundung aufweisenden, Befestigungsabschnitt aufweist, wobei sich die mindestens eine Befestigungsdurchführung, vorzugsweise zentral, durch den Befestigungsabschnitt erstreckt. Dies hat den Vorteil, dass mit einfachen Mitteln sowie auf eine kostengünstige Art und Weise das Batteriezellmodul an einem weiteren Batteriezellmodus, einem Batteriegehäuse oder dergleichen befestigbar ist.

Weiter bevorzugt sind die Batteriezellen durch eine Heißverstemmung in den Aufnahmekavitäten des Modulgrundkörpers gehalten und gegen die Kühlvorrichtung gedrückt. Hierfür weist der Modulgrundkörper vorzugsweise ein Grundkörpermaterial auf, welches besonders zum Heißverstemmen geeignet ist. Hierfür ist bspw. ein Thermoplast oder ein Duroplast mit guten Warmverformungseigenschaften erfindungsgemäß bevorzugt. Die Heißverstemmung ist vorzugsweise an einer der Kühlvorrichtung abgewandten Stirnseite der Batteriezelle ausgebildet, sodass der Modulgrundkörper im Bereich der Heißverstemmung gegen diese Stirnseite drückt und somit eine Druckkraft auf die Batteriezelle ausübt, welche in Richtung der Kühlvorrichtung wirkt. Demnach ist die Heißverstemmung vorzugsweise einer der ersten Grundkörperseite entgegengesetzten zweiten Grundkörperseite des Modulgrundkörpers ausgebildet. Dies hat den Vorteil, dass das Batteriezellmodul mit einfachen Mitteln sowie auf eine kostengünstige Art und Weise herstellbar ist. Ferner ist eine Wärmeanbindung der Batteriezellen an die Kühlvorrichtung auf diese Weise verbessert.

In einer besonders bevorzugten Ausgestaltung der Erfindung weisen die Aufnahmekavitäten zur Kühlvorrichtung hin eine Verjüngung auf. Vorzugsweise sind die Aufnahmekavitäten konisch ausgebildet. Es kann erfindungsgemäß auch vorgesehen sein, dass sich die Aufnahmekavitäten zur Kühlvorrichtung hin zunächst verjüngen und dann wieder aufweiten. Vorzugsweise ist der Modulgrundkörper elastisch oder zumindest im Bereich der Aufnahmekavitäten, vorzugsweise zumindest im Bereich der Verjüngung elastisch ausgebildet, um bei einem Übermaß der Batteriezellen, bspw. aufgrund von Fertigungstoleranzen oder herstellerspezifischen Abmessungen, nachgeben zu können. Dies hat den Vorteil, dass mit einfachen Mitteln sowie auf eine kostengünstige Art und Weise ein sicherer Halt der Batteriezellen in den Aufnahmekavitäten gewährleistbar ist. Durch die Verjüngung ist sichergestellt, dass die Batteriezellen zumindest in einem Abschnitt die Wandungen der Aufnahmekavitäten berühren und somit seitlich in den Aufnahmekavitäten geführt sind. Überdies hat eine Verjüngung den Vorteil, dass hierdurch ein Toleranzausgleich bereitgestellt ist, sodass bspw. eine leichte Montage der Batteriezellen auch bei einem Übermaß der Batteriezelle gewährleistet ist.

Vorzugsweise sind die elektrischen Leiter an einem gemeinsamen Leiterhalter der elektrischen Kopplungsvorrichtung gehalten. Der Leiterhalter weist vorzugsweise ein elektrisch isolierendes Material auf, um einen Kurzschluss zwischen den elektronischen Leitern zu vermeiden. Der Leiterhalter weist vorzugsweise einen offenen oder geschlossenen Leiterhalterrahmen auf, welcher die elektrischen Leiter umgibt. Auf diese Weise ist eine Stabilität des Leiterhalters verbessert. Alternativ oder zusätzlich weist der Leiterhalter vorzugsweise eine oder mehrere Schichten aus einem isolierenden Material auf. Die elektrischen Leiter sind vorzugsweise in eine Schicht integriert. Bei mehreren Schichten ist es bevorzugt, dass verschiedene elektrische Leiter in mehrere unterschiedliche Schichten des Leiterhalters integriert sind. Ein Leiterhalter hat den Vorteil, dass mit einfachen Mitteln sowie auf eine kostengünstige Art und Weise eine Montage der elektrischen Leiter an den Batteriezellen erleichtert ist, da beim Heranführen des Leiterhalters an die Batteriezellen die elektrischen Kopplungen der einzelnen elektrischen Leiter mit den Batteriezellen herstellbar sind. Die einzelnen Leiter sind vorzugsweise zusätzlich an den Batteriezellen fixiert, insbesondere mittels Laserschweißen, Punktschweißen oder dergleichen. Somit ist die Anzahl der Montageschritte, insbesondere der Positionierungsschritte, deutlich reduziert. Hierdurch lassen sich die Herstellungskosten des Batteriezellmoduls weiter senken.

Gemäß einer bevorzugten Ausführungsform der Erfindung ist der Leiterhalter an einer der ersten Grundkörperseite entgegengesetzten zweiten Grundkörperseite des Modulgrundkörpers gehalten. Vorzugsweise ist der Leiterhalter mittels einer Heißverstemmung am Modulgrundkörper gehalten. Weiter bevorzugt ist der Leiterhalter derart am Modulgrundkörper gehalten, dass der Leiterhalter die Batteriezellen in Richtung der Kühlvorrichtung drückt. Es ist erfindungsgemäß bevorzugt, dass der Leiterhalter, insbesondere als elektrischer Isolator ausgebildete Halteelemente aufweist, welche gegen die Stirnseiten der Batteriezellen, welche von der Kühlvorrichtung abgewandt sind, drücken. Dies hat den Vorteil, dass mit einfachen Mitteln sowie auf eine kostengünstige Art und Weise ist eine Montage des Batteriezellmoduls weiter erleichtert. Hierdurch lassen sich die Herstellungskosten des Batteriezellmoduls weiter senken.

Besonders bevorzugt weist der Leiterhalter eine elektrische Verbindungsvorrichtung zum elektrischen Verbinden des Batteriezellmoduls innerhalb der Batterie und/oder eine elektrische Sicherungsvorrichtung zum Unterbrechen einer elektrischen Kopplung im Falle eines Kurzschlusses und/oder einer Überhitzung und/oder eine Signalkoppelvorrichtung zum elektrischen Koppeln des Batteriezellmoduls mit einem Batteriemanagementsystem und/oder eine Sensorkopplungsvorrichtung zum Koppeln mit einem Temperatursensor des Batteriezellmoduls zum Messen einer Temperatur des Batteriezellmoduls auf. Mittels der elektrischen Verbindungsvorrichtung ist das Batteriezellmodul innerhalb der Batterie mit weiteren Batteriezellmodulen derselben Batterie verschaltbar. Alternativ weist die Batterie lediglich ein erfindungsgemäßes Batteriezellmodul auf. In diesem Fall ist die elektrische Verbindungsvorrichtung vorzugsweise zum elektrischen Verbinden der Batteriezelle mit einem Batterieanschluss der Batterie zum Anschließen der Batterie an eine Vorrichtung, wie bspw. ein E-Bike oder dergleichen, oder bereits als ein solcher Batterieanschluss ausgebildet. Die elektrische Sicherungsvorrichtung ist vorzugsweise als Schutzschaltung zum Unterbrechen der elektrischen Kopplung der Batteriezellen, insbesondere zum gezielten Unterbrechen der elektrischen Kopplung einzelner Batteriezellen, im Falle einer Störung ausgebildet. Unter einer Störung wird erfindungsgemäß in diesem Zusammenhang bspw. eine Überhitzung, ein Kurzschluss oder dergleichen verstanden. Die Signalkoppelvorrichtung ist zum elektrischen Koppeln des Batteriezellmoduls mit einem, insbesondere in die Batterie integrierten, Batteriemanagementsystem ausgebildet. Über die Signalkoppelvorrichtung sind elektrische Signale, wie bspw. Sensorsignale, vom Batteriezellmodul an das Batteriemanagementsystem übermittelbar. Die Sensorkopplungsvorrichtung ist zum Koppeln mit einem, vorzugsweise mehreren Temperatursensoren des Batteriezellmoduls ausgebildet. Der Temperatursensor ist zum Messen einer Temperatur des Batteriezellmoduls, vorzugsweise einer oder mehreren bestimmten Batteriezellen, ausgebildet. Dies hat den Vorteil, dass mit einfachen Mitteln sowie auf eine kostengünstige Art und Weise eine elektrische Kopplung des Batteriezellmoduls mit internen oder externen Komponenten gewährleistet ist.

Es ist erfindungsgemäß bevorzugt, dass mindestens eine Batteriezelle über ein elastisches Druckelement mit dem Modulgrundkörper verspannt ist, wobei das Druckelement eine höhere Nachgiebigkeit als die Batteriezelle aufweist. Unter einer höheren Nachgiebigkeit wird im Rahmen der Erfindung eine derartige Ausbildung verstanden, dass zum Erzielen einer vorgegebenen Verformung eine geringere Kraft erforderlich ist. Beim Heißverstemmen ist eine überschüssige Energie in Verformungsenergie des Druckelements umwandelbar, sodass eine Beschädigung der Batteriezelle vermeidbar ist. Dies hat den Vorteil, dass mit einfachen Mitteln sowie auf eine kostengünstige Art und Weise die Prozessführung beim Heißverstemmen erleichtert ist, da das Risiko einer Beschädigung der Batteriezelle beim Heißverstemmen reduziert ist. Somit sind Herstellungskosten des Batteriezellmoduls reduzierbar.

Gemäß einem zweiten Aspekt der Erfindung wird die Aufgabe durch ein Verfahren zur Herstellung eines erfindungsgemäßen Batteriezellmoduls gelöst. Das Verfahren weist die folgenden Schritte auf:
- Bereitstellen eines Modulgrundkörpers mit einer Mehrzahl von Aufnahmekavitäten zur Aufnahme von Batteriezellen,
- Anordnen der Batteriezellen in den Aufnahmekavitäten,
- Elektrisches Koppeln der Batteriezellen mittels elektrischer Leiter einer elektrischen Kopplungsvorrichtung,
- Anordnen eines Wärmeleitmediums an einer Stirnseite der Batteriezellen,
- Anordnen einer Kühlvorrichtung an dem Modulgrundkörper an der Stirnseite der Batteriezellen derart, dass die Batteriezellen über das Wärmeleitmedium mit der Kühlvorrichtung thermisch gekoppelt sind, und
- Fixieren der Batteriezellen am Modulgrundkörper derart, dass die Batteriezellen in Richtung der Kühlvorrichtung gedrückt werden.

Die einzelnen Verfahrensschritte können erfindungsgemäß auch in veränderter Reihenfolge durchgeführt werden. Das Verfahren kann manuell, teil- oder vollautomatisiert durchgeführt werden. Die Batteriezellen werden bspw. durch Einschieben in den Aufnahmekavitäten angeordnet. Das elektrische Koppeln der Batteriezellen mit den elektrischen Leitern erfolgt bspw. mittels Laserschweißen, Punktschweißen oder dergleichen. Das Anordnen des Wärmeleitmediums an der Stirnseite der Batteriezellen erfolgt bspw. durch einbringen des Wärmeleitmediums in einen Bereich der Aufnahmekavitäten und/oder auf einer den Batteriezellen zugewandten Seite der Kühlvorrichtung und/oderdirekt an den der Kühlvorrichtung zugewandten Stirnseiten der Batteriezellen. Die Kühlvorrichtung wird vorzugsweise mittels Heißverstemmen am Modulgrundkörper angeordnet. Alternativ kann die Kühlvorrichtung mittels Schrauben oder Klippsen am Modulgrundkörper angeordnet werden. Das Fixieren der Batteriezellen am Modulgrundkörper erfolgt vorzugsweise durch Heißverstemmen des Modulgrundkörpers gegen die der Kühlvorrichtung abgewandten Stirnseiten der Batteriezellen oder gegen den Leiterhalter.

Bei dem erfindungsgemäßen Verfahren ergeben sich sämtliche Vorteile, die bereits zu einem Batteriezellmodul gemäß dem ersten Aspekt der Erfindung beschrieben worden sind. Demnach hat das erfindungsgemäße Verfahren zur Herstellung eines erfindungsgemäßen Batteriezellmoduls gegenüber herkömmlichen Verfahren den Vorteil, dass mit einfachen Mitteln sowie auf eine kostengünstige Art und Weise ein Batteriezellmodul bereitgestellt ist, welches eine kompakte Bauweise aufweist und zudem eine besonders vorteilhafte Wärmeabfuhr der Verlustwärme aus den Batteriezellen über das Wärmeleitmedium und die Kühlvorrichtung gewährleistet. Das Risiko einer Überhitzung und des Batteriezellmoduls und somit eine Alterung sowie ein Leistungsverlust sind somit gegenüber herkömmlichen Batteriezellmodulen erheblich reduziert.

Ein erfindungsgemäßes Batteriezellmodul sowie ein erfindungsgemäßes Verfahren werden nachfolgend anhand von Zeichnungen näher erläutert. Es zeigen jeweils schematisch:
- Figur 1: in einer perspektivischen Ansicht ein Batteriezellmodul gemäß einer bevorzugten ersten Ausführungsform,
- Figur 2: in einer perspektivischen Schnittdarstellung das Batteriezellmodul aus Figur 1,
- Figur 3: in einer Schnittdarstellung das Batteriezellmodul aus Figur 1,
- Figur 4: in einer Schnittdarstellung eine erste Variante einer Verbindung einer Batteriezelle mit dem Modulgrundkörper,
- Figur 5: in einer Schnittdarstellung eine zweite Variante einer Verbindung einer Batteriezelle mit dem Modulgrundkörper, und
- Figur 6: in einem Ablaufdiagramm eine bevorzugte Ausführungsform des erfindungsgemäßen Verfahrens.

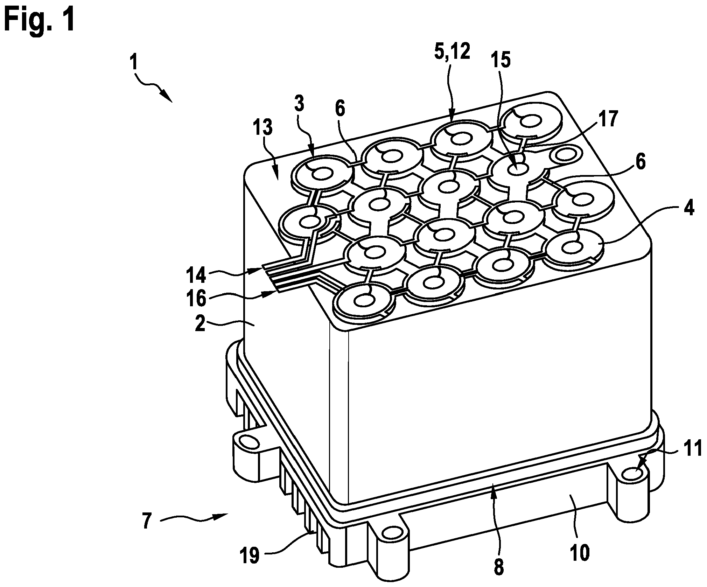

Elemente mit gleicher Funktion und Wirkungsweise sind in den Figuren 1 bis 6 jeweils mit denselben Bezugszeichen versehen.

In Fig. 1 ist ein Batteriezellmodul 1 gemäß einer bevorzugten ersten Ausführungsform schematisch in einer perspektivischen Ansicht dargestellt. Das Batteriezellmodul 1 weist einen Modulgrundkörper 2 aus einem elektrisch nicht leitenden Material auf. In dem Modulgrundkörper 2 ist eine Mehrzahl von Aufnahmekavitäten 3 ausgebildet, in denen jeweils eine Batteriezelle 4 angeordnet ist. Die Batteriezellen 4 sind an einer zweiten Grundkörperseite 13 des Modulgrundkörpers 2 über elektrische Leiter 6 einer als Leiterhalter 12 ausgebildeten elektrischen Kopplungsvorrichtung 5 miteinander verschaltet. Die elektrische Kopplungsvorrichtung 5 weist eine elektrische Verbindungsvorrichtung 14 zum elektrischen Verbinden des Batteriezellmoduls 1 innerhalb der Batterie auf. Zudem weist die elektrische Kopplungsvorrichtung 5 eine elektrische Sicherungsvorrichtung 15 zum Unterbrechen einer elektrischen Kopplung einzelner Batteriezellen 4 im Falle eines Kurzschlusses und/oder einer Überhitzung der jeweiligen Batteriezelle 4 auf. Ferner Zudem weist die elektrische Kopplungsvorrichtung 5 eine Signalkoppelvorrichtung 16 zum elektrischen Koppeln des Batteriezellmoduls 1 mit einem Batteriemanagementsystem auf. Schließlich weist die elektrische Kopplungsvorrichtung 5 eine Sensorkopplungsvorrichtung 17 zum Koppeln mit einem nicht abgebildeten Temperatursensor des Batteriezellmoduls 1 zum Messen einer Temperatur des Batteriezellmoduls 1 auf.

An einer ersten Grundkörperseite 8 des Modulgrundkörpers 2 ist eine Kühlvorrichtung 7 angeordnet. Die Kühlvorrichtung 7 weist eine Kühlplatte 10 auf, an welcher seitlich Befestigungsdurchführungen 11 zum Durchführen von nicht dargestellten Befestigungsmitteln angeordnet sind. An einer Unterseite weist die Kühlvorrichtung 7 eine Mehrzahl von Kühlrippen 19 auf, die sich parallel zueinander über die gesamte Unterseite der Kühlvorrichtung 7 erstrecken. Die Kühlrippen 19 können erfindungsgemäß auch eine alternative Ausbildung aufweisen, wie bspw. wellenförmig, zickzackförmig, unterbrochen oder dergleichen. Die Kühlplatte 10 ist mit dem Modulgrundkörper 2 bspw. heißverstemmt, verklebt, verklippst oder verschraubt.

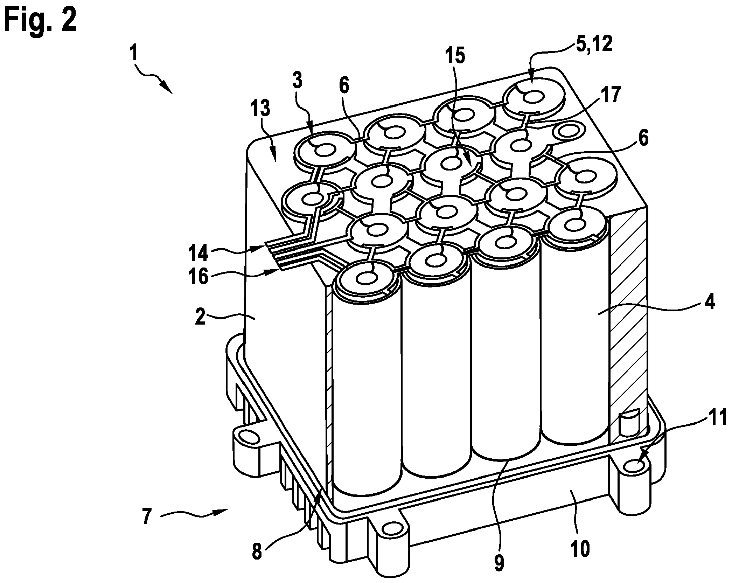

Fig. 2 zeigt das Batteriezellmodul 1 gemäß der bevorzugten ersten Ausführungsform schematisch in einer perspektivischen Schnittdarstellung. In dieser Ansicht ist ein Wärmeleitmedium 9 erkennbar, welches zwischen den Batteriezellen 4 und der Kühlplatte 10 angeordnet ist. Das Wärmeleitmedium 9 ist bspw. als Wärmeleitgel, Wärmeleitpaste oder dergleichen ausgebildet.

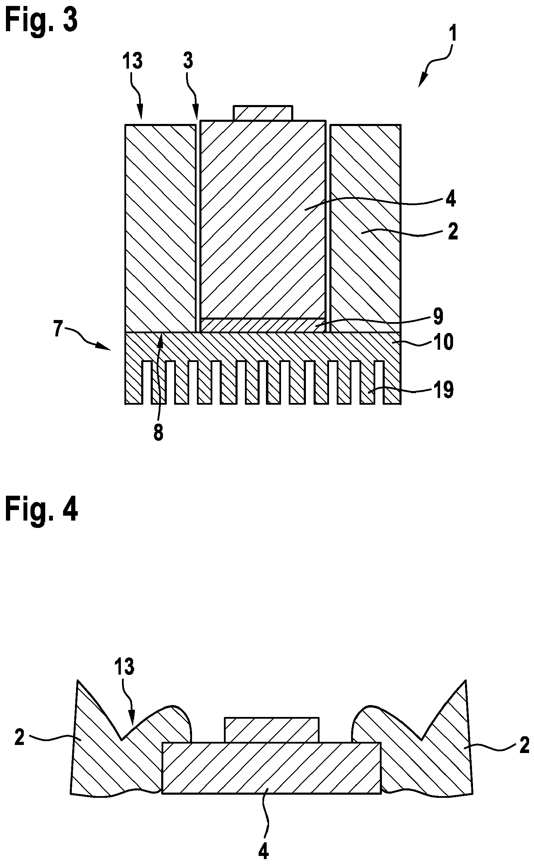

In Fig. 3 ist das Batteriezellmodul 1 gemäß der bevorzugten ersten Ausführungsform schematisch in einer Schnittdarstellung dargestellt. In dieser Darstellung sind die parallel nebeneinander an der Kühlplatte 10 der Kühlvorrichtung 7 angeordneten Kühlrippen 19 erkennbar. Ebenso ist das zwischen der Batteriezelle 4 und der Kühlvorrichtung 7 angeordnete Wärmeleitmedium 9 deutlich sichtbar.

Fig. 4 zeigt eine erste Variante einer Verbindung einer Batteriezelle 4 mit dem Modulgrundkörper 2 schematisch in einer Schnittdarstellung. Die Batteriezelle 4 ist über eine Heißverstemmung des Modulgrundkörpers 2 an der zweiten Grundkörperseite 13 am Modulgrundkörper 2 gehalten.

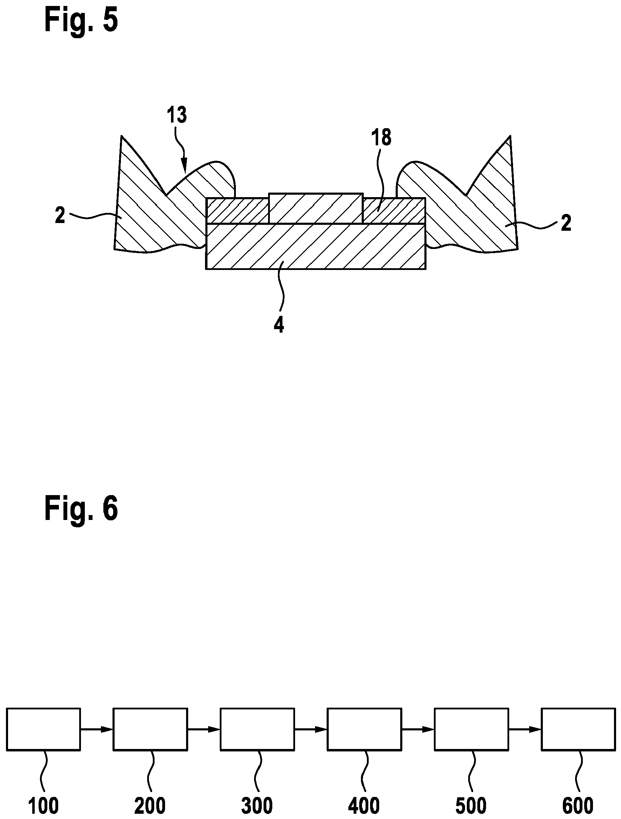

In Fig. 5 ist eine zweite Variante einer Verbindung einer Batteriezelle 4 mit dem Modulgrundkörper 2 schematisch in einer Schnittdarstellung dargestellt. Die Batteriezelle 4 ist über eine Heißverstemmung des Modulgrundkörpers 2 an der zweiten Grundkörperseite 13 am Modulgrundkörper 2 gehalten, wobei im Bereich der Heißverstemmung ein Druckelement 18 zwischen dem Modulgrundkörper 2 und der Batteriezelle 4 angeordnet ist. Durch das Heißverstemmen ist das Druckelement 18 leicht elastisch verformt, sodass die Batteriezelle 4 in Richtung der Kühlvorrichtung 7 gedrückt und vor einer mechanischen Beschädigung beim Heißverstemmen geschützt ist.

Fig. 5 zeigt eine bevorzugte Ausführungsform des erfindungsgemäßen Verfahrens zur Herstellung eines erfindungsgemäßen Batteriezellmoduls 1 schematisch in einem Ablaufdiagramm. In einem ersten Verfahrensschritt 100 wird ein Modulgrundkörper 2 mit einer Mehrzahl von Aufnahmekavitäten 3 zur Aufnahme von Batteriezellen 4 bereitgestellt. Dies erfolgt bspw. mittels einer Robotervorrichtung. In einem zweiten Verfahrensschritt 200 wird in jeder der Aufnahmekavitäten 3 eine Batteriezelle (4) angeordnet. Dies erfolgt bspw. mittels einer Robotervorrichtung durch Einschieben der Batteriezellen 4 in die Aufnahmekavitäten 3. In einem dritten Verfahrensschritt 300 werden die Batteriezellen 4 mittels elektrischer Leiter 6 einer elektrischen Kopplungsvorrichtung 5 miteinander verschaltet. Dies erfolgt vorzugsweise mittels einer Robotervorrichtung sowie mittels Laserschweißen. In einem vierten Verfahrensschritt 400 wird an einer Stirnseite der Batteriezellen 4 ein Wärmeleitmedium 9 angeordnet. Die Stirnseite ist vorzugsweise der elektrischen Kopplungsvorrichtung 5 abgewandt. Das Anordnen des Wärmeleitmediums 9 erfolgt vorzugsweise mittels einer Robotervorrichtung durch Einspritzen eines Wärmeleitgels in die Aufnahmekavitäten 3 und/oder auf eine Kühlvorrichtung 7. In einem fünften Verfahrensschritt 500 wird eine Kühlvorrichtung 7 an dem Modulgrundkörper 2 an der Stirnseite der Batteriezellen 4 derart angeordnet, dass die Batteriezellen 4 über das Wärmeleitmedium 9 mit der Kühlvorrichtung 7 thermisch gekoppelt sind. Das Anordnen erfolgt vorzugsweise mittels einer Robotervorrichtung. Vorzugsweise wird die Kühlvorrichtung 7 am Modulgrundkörper 2 fixiert. In einem sechsten Verfahrensschritt 600 werden die Batteriezellen 4 derart am Modulgrundkörper 2 fixiert, dass die Batteriezellen 4 in Richtung der Kühlvorrichtung 7 gedrückt werden. Somit ist eine sichere thermische Anbindung der Batteriezellen 4 über das Wärmeleitmedium 9 mit der Kühlvorrichtung 7 auch bei Maßabweichungen der Batteriezellen 4 gewährleistet. Das Fixieren erfolgt vorzugsweise mittels einer Robotervorrichtung, vorzugsweise durch Heißverstemmen, Verschrauben, Umspritzen oder dergleichen.

## Patentansprüche

1. Batteriezellmodul (1) für eine Batterie, aufweisend einen Modulgrundkörper (2) mit einer Mehrzahl von Aufnahmekavitäten (3), wobei in den Aufnahmekavitäten (3) jeweils eine Batteriezelle (4) des Batteriezellmoduls (1) angeordnet ist, eine elektrische Kopplungsvorrichtung (5) mit einer Mehrzahl von elektrischen Leitern (6), wobei die Batteriezellen (4) über die elektrischen Leiter (6) miteinander elektrisch gekoppelt sind, sowie eine Kühlvorrichtung (7) zum Kühlen der Batteriezellen (4), wobei die Kühlvorrichtung (7) an einer ersten Grundkörperseite (8) des Modulgrundkörpers (2) angeordnet ist,
**dadurch gekennzeichnet,**
**dass** zwischen der Kühlvorrichtung (7) und den Batteriezellen (4) ein verformbares Wärmeleitmedium (9) derart angeordnet ist, dass die Batteriezellen (4) über das Wärmeleitmedium (9) mit der Kühlvorrichtung (7) thermisch gekoppelt sind, und wobei die Batteriezellen (4) über den Modulgrundkörper (2) in Richtung der Kühlvorrichtung (7) gedrückt sind.

2. Batteriezellmodul (1) nach Anspruch 1,
**dadurch gekennzeichnet,**
**dass** die Kühlvorrichtung (8) eine Kühlplatte (10) aufweist.

3. Batteriezellmodul (1) nach Anspruch 2,
**dadurch gekennzeichnet,**
**dass** die Kühlplatte (10) Befestigungsdurchführungen (11) zum Durchführen von Befestigungsmitteln aufweist.

4. Batteriezellmodul (1) nach einem der vorangegangenen Ansprüche,
**dadurch gekennzeichnet,**
**dass** die Batteriezellen (4) durch eine Heißverstemmung in den Aufnahmekavitäten (3) des Modulgrundkörpers (2) gehalten und gegen die Kühlvorrichtung (7) gedrückt sind.

5. Batteriezellmodul (1) nach einem der vorangegangenen Ansprüche,
**dadurch gekennzeichnet,**
**dass** die Aufnahmekavitäten (3) zur Kühlvorrichtung (7) hin eine Verjüngung aufweisen.

6. Batteriezellmodul (1) nach einem der vorangegangenen Ansprüche,
**dadurch gekennzeichnet,**
**dass** die elektrischen Leiter (6) an einem gemeinsamen Leiterhalter (12) der elektrischen Kopplungsvorrichtung (5) gehalten sind.

7. Batteriezellmodul (1) nach Anspruch 6,
**dadurch gekennzeichnet,**
**dass** der Leiterhalter (12) an einer der ersten Grundkörperseite (8) entgegengesetzten zweiten Grundkörperseite (13) des Modulgrundkörpers (2) gehalten ist.

8. Batteriezellmodul (1) nach Anspruch 6 oder 7,
**dadurch gekennzeichnet,**
**dass** der Leiterhalter (12) eine elektrische Verbindungsvorrichtung (14) zum elektrischen Verbinden des Batteriezellmoduls (1) innerhalb der Batterie und/oder eine elektrische Sicherungsvorrichtung (15) zum Unterbrechen einer elektrischen Kopplung im Falle eines Kurzschlusses und/oder einer Überhitzung und/oder eine Signalkoppelvorrichtung (16) zum elektrischen Koppeln des Batteriezellmoduls (1) mit einem Batteriemanagementsystem und/oder eine Sensorkopplungsvorrichtung (17) zum Koppeln mit einem Temperatursensor des Batteriezellmoduls (1) zum Messen einer Temperatur des Batteriezellmoduls (1) aufweist.

9. Batteriezellmodul (1) nach einem der vorangegangenen Ansprüche,
**dadurch gekennzeichnet,**
**dass** mindestens eine Batteriezelle (4) über ein elastisches Druckelement (18) mit dem Modulgrundkörper (2) verspannt ist, wobei das Druckelement (18) eine höhere Nachgiebigkeit als die Batteriezelle (4) aufweist.

10. Verfahren zur Herstellung eines Batteriezellmoduls (1) nach einem der vorangegangenen Ansprüche, aufweisend die folgenden Schritte:
- Bereitstellen eines Modulgrundkörpers (2) mit einer Mehrzahl von Aufnahmekavitäten (3) zur Aufnahme von Batteriezellen (4),
- Anordnen der Batteriezellen (4) in den Aufnahmekavitäten (3),
- Elektrisches Koppeln der Batteriezellen (4) mittels elektrischer Leiter (6) einer elektrischen Kopplungsvorrichtung (5),
- Anordnen eines Wärmeleitmediums (9) an einer Stirnseite der Batteriezellen (4),
- Anordnen einer Kühlvorrichtung (7) an dem Modulgrundkörper (2) an der Stirnseite der Batteriezellen (4) derart, dass die Batteriezellen (4) über das Wärmeleitmedium (9) mit der Kühlvorrichtung (7) thermisch gekoppelt sind, und
- Fixieren der Batteriezellen (4) am Modulgrundkörper (2) derart, dass die Batteriezellen (4) in Richtung der Kühlvorrichtung (7) gedrückt werden.
